# EUROPEAN PATENT SPECIFICATION

(11) **EP 2 894 728 B1**
(45) Date of publication and mention of the grant of the patent: **15.04.2020**
(21) Application number: 14150947.1
(22) Date of filing: 13.01.2014
(51) Int. Cl.: H01R 13/6592, H02G 15/105, H02G 15/188

(54) **Shielding connector and method and tool for installing a shielding connector**
Abschirmungssteckverbinder und Verfahren und Werkzeug zur Installation eines Abschirmungssteckverbinders
Connecteur de blindage, procédé et outil permettant d'installer un tel connecteur

(43) Date of publication of application: 15.07.2015
(73) Proprietor: Tyco Electronics Raychem GmbH, 85521 Ottobrunn (DE)
(72) Inventor: Ahrens, Heiko, 82319 Starnberg (DE); Well, Burghard, 21435 Stelle (DE); Simonsohn, Thilo, 81735 München (DE)
(74) Representative: Patentanwaltskanzlei WILHELM & BECK

(56) References cited:
- EP-A1- 0 732 768
- WO-A1-2011/069547
- DE-C1- 19 841 572
- DE-U1- 9 307 958
- US-A- 3 109 052
- US-A- 3 448 430
- US-A- 4 164 621

## Description

The present invention relates to a shielding connector according to claim 1.

Power cables are known in the state of the art. Medium-voltage power cables may for example be designed for voltages between 1 kV and 72 kV. Power cables usually comprise, among other components, a metal conductor and a shielding (screen). The shielding may for example comprise aluminum, lead or copper. In particular, the shielding may for example comprise aluminum tape.

It is known in the state of the art that at connections between two power cables not only the metal conductors of the power cables have to be electrically connected to each other but also the shieldings of the two power cables. Additionally, it may also be necessary to electrically connect the shieldings of the two power cables to an earthing contact. The document WO 2011/069547 describes a biasing connector for biasing a shielding of a power cable in connection with a cable joint.

Document DE 93 07 958 U1 describes a connector for connecting a shielding of a cable to ground potential.

Document US 3,448,430 A describes an electrical connector providing grounding connection for grounding a cable having an outer shell or metal jacket, to a terminating body member.

Document EP 0 732 768 A1 describes a process for making an electrical connection to a metallic screen of a power cable and a ring for carrying out the process.

Document US 4,164,621 A describes a cable shield connecting device with a looped metal bar and a plurality of relatively flexible metallic fingers affixed to the bar.

It is an object of the present invention to provide a shielding connector for contacting a shielding of a power cable. This objective is achieved by a shielding connector according to claim 1.

Preferred embodiments are disclosed in the dependent claims.

A shielding connector for contacting a shielding of the power cable comprises a clamping element and a plurality of strips extending from the clamping element. The clamping element and the strips are formed integrally. The clamping element of that shielding connector can be brought into mechanical contact to a shielding of a power cable to provide an electric connection to the shielding of the power cable. The strips of the shielding connector may then provide an electric connection to the shielding of the power cable at a position away from the shielding of the power cable. Advantageously, this renders soldering or welding of a copper braid or another type of electric lead to the clamping element of the shielding connector unnecessary. This can advantageously make installing the shielding connector easier and can result in an increased robustness of the shielding connector and of cable connections employing the cable connector. The abandonment of a separate braid or other lead may also result in a reduction of costs.

The clamping element is bent around a first bending axis. Advantageously, this allows the clamping element of the shielding connector to closely lie against a power cable to provide a good electric connection to a shielding of that power cable. The radius of the bend of the clamping element of the shielding connector is preferably adjusted to the diameter of the power cable

In an embodiment of the shielding connector, the strips are arranged at an edge of the clamping element that is arranged perpendicularly to the first bending axis. Consequently, the strips extend in a direction parallel to an extension direction of the power cable if the shielding connector is installed on a power cable.

In an embodiment of the shielding connector, the clamping element comprises a plurality of protruding elements protruding outwards from a convex surface of the clamping element. Advantageously, the protruding elements arranged at the convex surface of the clamping element may pinch the shielding of the power cable when the shielding connector is connected to the power cable for creating a robust mechanical and electrical connection between a clamping element of the shielding connector and the shielding of the power cable. The plurality of protruding elements protruding outwards from the convex surface of the clamping element of the shielding connector may for example be designed similarly to a grater.

The shielding connector comprises a sealing portion. The sealing portion is connected to the clamping element by the strips. The sealing portion and the strips are formed integrally. The sealing portion of the shielding connector may serve to create a sealing around the power cable when the shielding connector is installed on a power cable. The sealing may for example be a watertight sealing.

The sealing portion is bent around a second bending axis which is parallel to the first bending axis. The sealing portion is bent around the second bending axis in an opposite direction compared to the bending of the clamping element.

The second bending axis may be parallel or even coaxial to the cable axis. Advantageously, the sealing portion of the shielding connector may then lie closely against the power cable when the shielding connector is installed in a power cable. Preferably, the radius of the bend of the sealing portion of the shielding connector is adapted to the diameter of the power cable. The radius may be larger than that of the power cable to allow for a sealing mastic to be installed between the cable jacket and the shielding connector.

In an embodiment of the shielding connector, the shielding connector comprises a connection portion. A connection portion is connected to the sealing portion. The connection portion and the sealing portion are formed integrally. The connection portion of the shielding connector may be designed for being connected to a braid or another kind of electric lead. The braid or other kind of electric leads may for example serve to electrically connect the shielding connector to an earthing contact (ground contact). The braid or other electric lead may for example be soldered or welded to the connection portion of the shielding connector. Advantageously, this allows for using the shielding connector to electrically connect the shielding of a power cable to an earthing contact.

In an embodiment of the shielding connector, the shielding connector comprises a plurality of outer strips. The outer strips are connected to the sealing portion. The outer strips and the sealing portion are formed integrally. The outer strips may for example comprise a lengths of up to 50 cm or more. The outer strips of the shielding connector may be used to provide an electric connection between the shielding connector and an external earthing contact (ground contact). Advantageously, the outer strips of the shielding connector may eliminate the need for connecting the shielding connector to an external earthing contact via a separate braid or another type of electric lead.

In an embodiment of the shielding connector, the outer strips are jointly arranged in a tubing. Advantageously, this re-sults in a more compact design of the shielding connector. The tubing may for example be electrically insulating. The tubing may for example be made of a heatshrink material.

In an embodiment of the shielding connector, the shielding connector comprises a metallic sheet material. Advanta-geously, this allows for producing the shielding connector by means of stamping and bending, allowing for a cost-efficient production of the shielding connector.

A method for installing a shielding connector not claimed as part of the present invention may be used for installing a shielding connector that is designed as de-scribed above. The method comprises steps for arranging the clamping element of the shielding connector below a shielding of a power cable and for bending the strips of a shielding connector towards a cable jacket of the power cable. Advantageously, this methods create an electric connection between the strips of the shielding connector and the shielding of the power cable. This makes it unnecessary to connect a braid or another kind of lead to the clamping element of the shielding connector.

In an example of the method, the method comprises additional steps for arranging the sealing portion of the shielding connector in parallel to the power cable and for wrapping a mastic around the sealing portion and the power cable to create a sealing. Advantageously, this method allows for creating a sealing in the area of the shielding connector and the power cable. The sealing may for example be a watertight sealing.

In an example of the method, the method comprises an additional step for connecting an earthing lead to the connection portion of the shielding connector. The earthing lead can then be connected to an earthing contact. The earthing lead may already be connected to the connection portion before in-stalling the shielding connector on the power cable. Advantageously this allows for electrically connecting the shielding of the power cable to the earthing contact.

A tool for installing a shielding connector not claimed as part of the present invention can be used in conjunction with a shielding connector as described above. The tool comprises a holder portion. The holder portion comprises a concave holding section. Advantageously, the tool may be used for bending the strips of the shielding connector backwards towards a cable jacket of a power cable after the clamping element of the shielding connector has been arranged below a shielding of the power cable. The holding section of the holder portion of the tool may be used for holding the strips and/or the sealing portion of the shielding connector. Advantageously, the tool can make bending the strips of the shielding connector backwards towards the cable jacket of the power cable easier. A particular advantage is that the tool makes it unnecessary to directly touch the strips of the shielding connector.

In an example of the tool, the tool comprises a handle connected to the holder portion. Advantageously, the handle of the tool may be used for holding the tool in a hand while using the tool for bending the strips of a shielding connector. This allows for an easy and convenient handling of the tool.

In an example of the tool, the holding section comprises the shape of a sector of a cylindrical tube. Advantageously, this allows for a simple design of the tool that makes easy and cost-effective production of the tool possible.

In an example of the tool, the holding portion comprises the shape of a saddle. This shape may make it easier to bend the strips of a shielding connector with the tool.

The invention will now be explained in more detail with reference to the Figures in which:
Figure 1 shows a top-view of a metallic sheet material for producing a first shielding connector not according to the present invention;
Figure 2 shows a perspective view of the first shielding connector after bending the metallic sheet material around a bending axis;
Figure 3 shows a perspective view of the first shielding connector after bending strips of the first shielding connector in a radial direction;
Figure 4 shows a perspective view of the first shielding connector after bending the strips of the first shielding connector backwards;
Figure 5 shows a top-view of a metallic sheet material for producing a second shielding connector;
Figure 6 shows a perspective view of the second shielding connector after bending the metallic sheet mate-rial;
Figure 7 shows a perspective view of the second shielding connector and a power cable after arranging a clamping element of the shielding connector below a shielding of the power cable;
Figure 8 shows a perspective view of the power cable and the second shielding connector after arranging bandage elements around a contact section of the power cable;
Figure 9 shows a perspective view of the power cable and the second shielding connector while bending strips of the second shielding connector backwards towards a cable jacket of the power cable;
Figure 10 shows a perspective view of the power cable and the second shielding connector after creating a sealing at a sealing portion of the second shielding con-nector;
Figure 11 shows a top-view of a metallic sheet material for producing a third shielding connector according to the present invention;
Figure 12 shows a schematic side view of a first tool for installing a shielding connector, not claimed as part of the present invention;
Figure 13 shows a bottom view of the first tool;
Figure 14 shows a schematic perspective view of a second tool for installing a shielding connector, , not claimed as part of the present invention; and
Figure 15 shows a sectional view of the second tool.

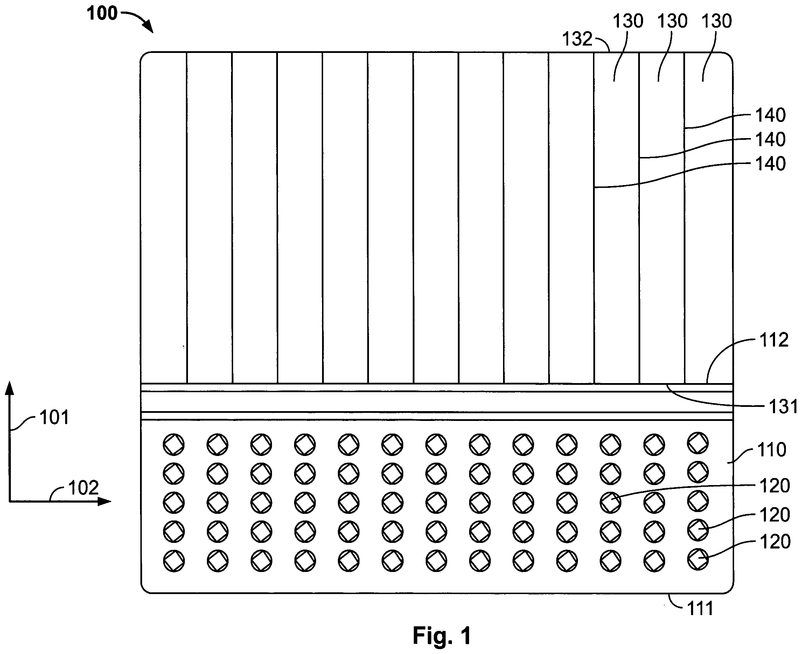

Figure 1 shows a schematic top view of an unfinished first shielding connector 100. The first shielding connector 100 can be used to electrically contact a shielding of a power cable. The power cable may for example be a medium-voltage power cable. A medium-voltage power cable may for example be designed for voltages between 1 kV and 72 kV. The first shielding connector 100 may for example be used to electrically contact the shielding of the power cable at a connec-tion point between the power cable and a further power cable.

The unfinished first shielding connector 100 depicted in Figure 1 comprises a generally flat rectangular shape and ex-tends into a longitudinal direction 101 and a lateral direc-tion 102. The first shielding connector 100 comprises an electrically conductive material, preferably a metal. The un-finished first shielding connector 100 may for example be stamped or punched from a metallic sheet material.

The unfinished first shielding connector 100 comprises a clamping element 110 and a plurality of strips 130. The clamping element 110 and the strips 130 are formed inte-grally.

The clamping element 110 comprises an approximately rectangular shape. The clamping element 110 comprises a first edge 111 and a second edge 112 that is opposed to the first edge 111. The first edge 111 and the second edge 112 both extend along the lateral direction 102.

The strips 130 are arranged at the second edge 112 of the clamping element 110. Each strip 130 comprises a first end 131 and a second end 132 this is opposed to the first end 131. The first end 131 of the strips 130 are connected to the second edge 112 of the clamping element 110. The strips 130 each extend into the longitudinal direction 101. The strips 130 are arranged in parallel to each other. Each strip 130 comprises an approximately rectangular shape. The strips 130 are separated from each other by slits 140.

The clamping element 110 comprises a plurality of protruding elements 120. The protruding elements 120 are preferably arranged in a regular pattern. Each protruding element 120 comprises a number of sharp corners which protrude in a direction perpendicular to the longitudinal direction 101 and the lateral direction 102. The protruding elements 120 may for example be produced by a stamping or punching technique. The protruding elements 120 give the clamping element 110 of the first shielding connector 100 the appearance of a grater, for example a cheese grater.

The clamping element 110 of the first shielding connector 100 may for example be 85 mm long in the lateral direction 102 and approximately 30 mm wide in the longitudinal direction 101. The first shielding connector 100 may for example comprise thirteen strips 130 that cover the full length of the second edge 112 of the clamping element 110. In the longitudinal direction 101, the strips 130 may for example comprise a length of approximately 45 mm. In the direction perpendicular to the longitudinal direction 101 and the lateral direction 102, the first shielding connector 100 may for example comprise a thickness of 0.5 mm.

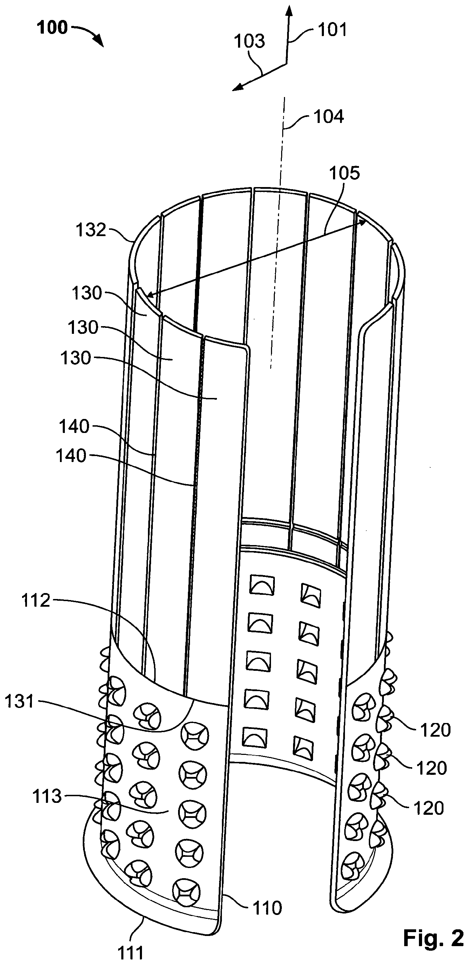

Figure 2 shows a schematic perspective view of the first shielding connector 100 after a further processing of the first shielding connector 100. The first shielding connector 100 has been bent around a bending axis 104. The bending axis 104 is oriented in parallel to the longitudinal direction 101. The first shielding connector 100 has been bent around an angle of less 260°. Preferably, the first shielding connector 100 has been bent about an angle of more than 90°, preferably more than 180°. The first shielding connector 100 may have been bent about an angle between for example 280° and 290°.

Due to being bent around the bending axis 104, the first shielding connector 100 comprises the shape of a sector of a cylindrical tube. The cylindrical tube comprises a diameter 105 that is determined by the length of the shielding connector 100 in the lateral direction 102 in the depiction of Figure 1 and by the bending angle of the first shielding connector 100 around the bending axis 104. The diameter 105 may be chosen to match the diameter of a shielding of a power cable. The diameter 105 may for example be 25 mm.

Due to the bending of the first shielding connector 100 around the bending axis 104, the protruding elements 120 of the clamping element 110 now protrude outwards in a radial direction 103 from a convex surface 113 of the clamping element 110.

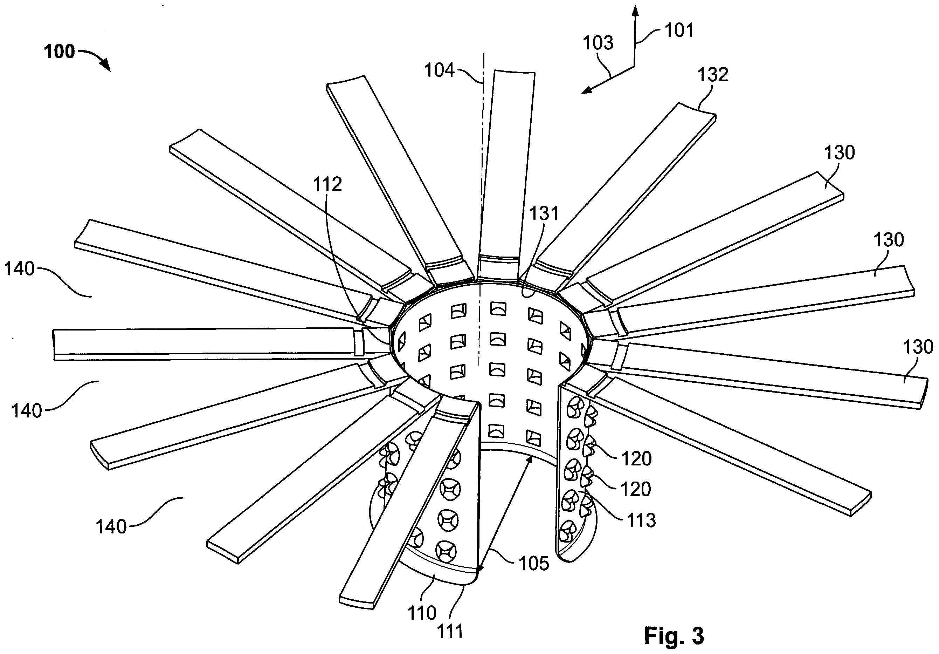

Figure 3 shows a perspective view of the first shielding connector 100 in a further subsequent processing state. The strips 130 of the first shielding connector 100 have each been bent about an angle of approximately 90° in such a way that all strips 130 of the first shielding connector 100 now extend into the radial direction 103. The first ends 131 of the strips 130 are connected to the second edge 112 of the clamping element 110. From the first ends 131, the strips 130 extend outwards in the radial direction 103.

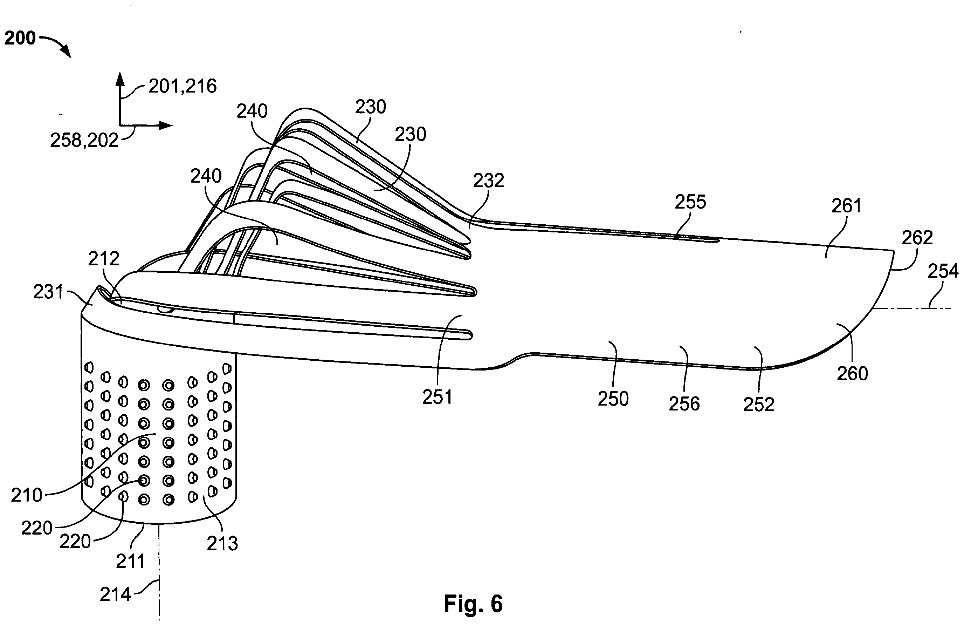

In the condition depicted in Figure 3, the first shielding connector 100 may be installed to electrically contact a shielding of a power cable. The installation procedure will be explained in more detail below with reference to Figures 6 to 10.

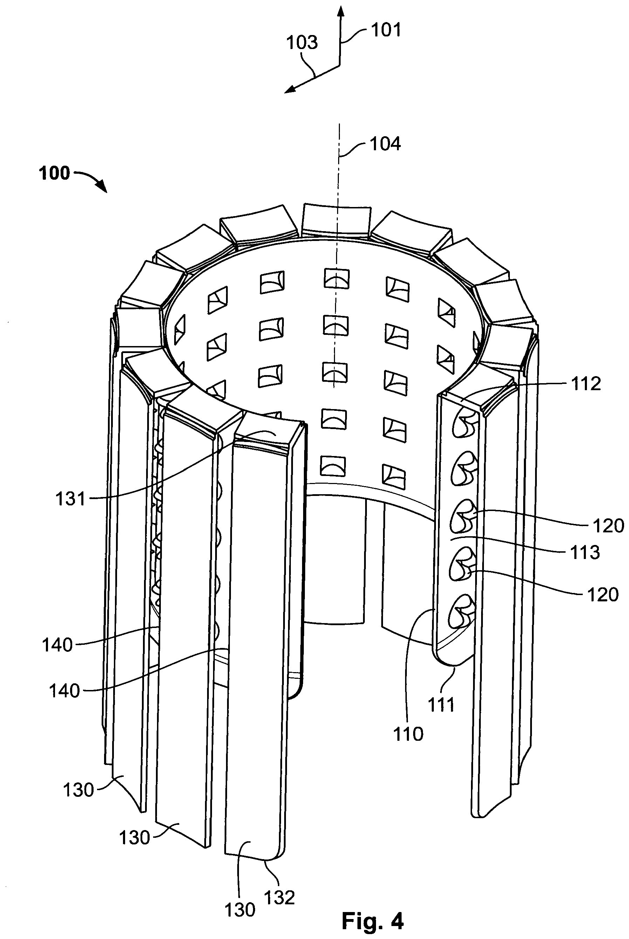

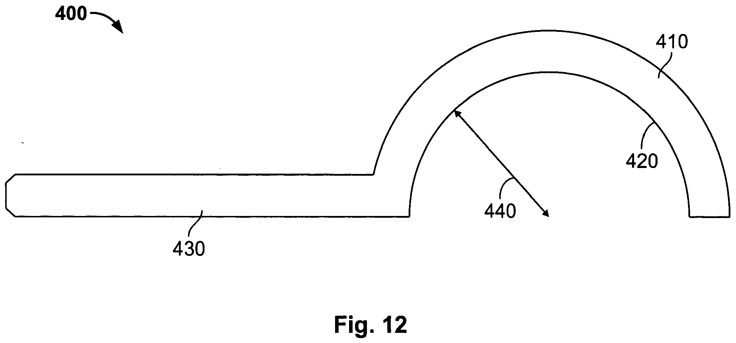

During the installation procedure, the strips 130 of the first shielding connector 100 may be bent further into the arrangement schematically shown in Figure 4. In this arrangement, the strips 130 are bent backwards about an angle of 180° with respect to their original orientation depicted in Figure 2. In the state depicted in Figure 4, the strips 130 extend in parallel to the longitudinal direction 101 and are arranged in parallel to the convex surface 113 of the clamping element 110. Bending the strips 130 may for example be performed using a tool as explained below with reference to Figures 12 to 15.

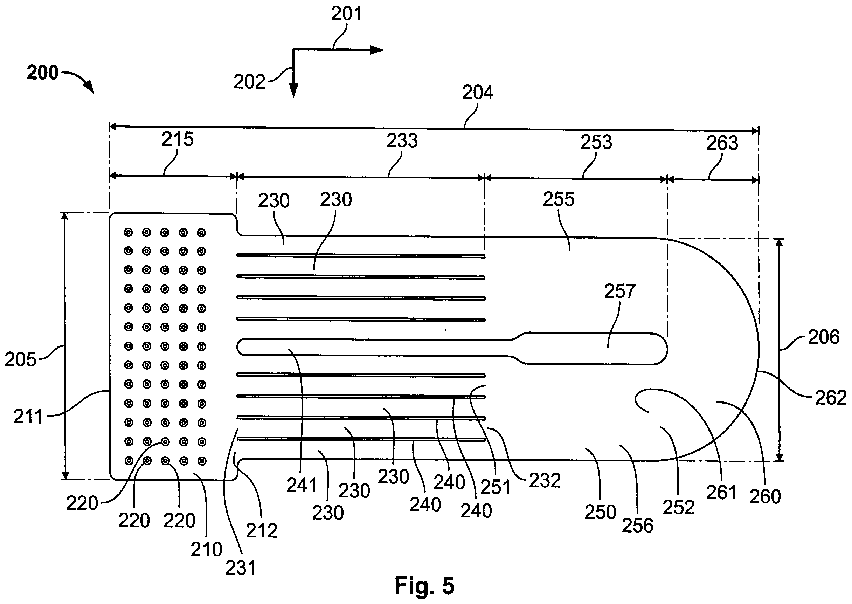

Figure 5 shows a schematic top view of a second shielding connector 200. The second shielding connector 200 may be used to electrically contact a shielding of a power cable, for example a shielding of a medium-voltage power cable. The second shielding connector 200 is similar to the first shielding connector 100. The description of the first shielding connector 100 also applies to the second shielding connector 200 unless otherwise noted.

The second shielding connector 200 is depicted in an unfinished state during production of the second shielding connector 200. The unfinished second shielding connector 200 comprises a generally flat shape and extends into a longitudinal direction 201 and a lateral direction 202. The unfinished second shielding connector 200 comprises an electrically conductive material, preferably a metal. The second shielding connector 200 may for example be produced by stamping or punching from a metallic sheet material.

The second shielding connector 200 comprises a clamping element 210, a plurality of strips 230, a sealing portion 250 and a connection portion 260. The clamping element 210, the strips 130, the sealing portion 250 and the connection portion 260 are arranged one after another along the longitudinal direction 201. The entire second shielding connector 200 is formed integrally.

In the longitudinal direction 201, the second shielding connector 200 comprises a total length 204. The length 204 may for example be 178 mm. In the lateral direction 202, the second shielding connector 200 comprises a first width 205 in the section of the clamping element 210 and a second width 206 in the sections of the strips 230, the sealing portion 250 and the connection portion 260. The first width 205 may for example be 70 mm. The second width 206 may for example be 58 mm. In a direction perpendicular to the longitudinal direction 201 and the lateral direction 202, the second shielding connector 200 may comprise a material thickness of for example 0.5 mm.

The clamping element 210 comprises an approximately rectangular shape. The clamping element 210 comprises a first edge 211 and a second edge 212 that is opposed to the first edge 211. The first edge 211 and the second edge 212 are both arranged in parallel to the lateral direction 202. Between the first edge 211 and the second edge 212, the clamping element 210 comprises a length 215 in the longitudinal direction 201. The length 215 may for example be 35 mm. A longitudinal direction 216 of the clamping element 210 coincides with the longitudinal direction 201.

The strips 230 are arranged at the second edge 212 of the clamping element 210. Each strip 230 comprises a first end 231 and a second end 232 that is opposed to the first end 231. The first ends 231 of the strips 230 are integrally connected to the second edge 212 of the clamping element 210. The strips 230 extend in parallel to the longitudinal direction 201. Between the first ends 231 and the second ends 232, the strips 230 comprise a length 233 in the longitudinal direction 201. The length 233 may for example be 70 mm.

In the example depicted in Figure 5, the second shielding connector 200 comprises ten strips 230 arranged in two groups of five strips 230 each. The strips 230 of each group are separated by first slits 240 that are arranged in parallel to the longitudinal direction 201. The two groups of strips 230 are separated by a central slit 241 which is oriented in parallel to the longitudinal direction 201. In the lateral direction 202, the first slit 240 may for example comprise a width of 0.5 mm. The central slit 241 may for example comprise a width of 4 mm in the lateral direction 202.

The sealing portion 250 comprises a first end 251 and a second end 252 that is opposed to the first end 251. The first end 251 of the sealing portion 250 is integrally connected to the second ends 232 of the strips 230. Between the first end 251 and the second 252, the sealing 250 comprises a length 253 in the longitudinal direction 201. The length 253 may for example be 44 mm. A longitudinal direction 258 of the sealing portion 250 coincides with the longitudinal direction 201.

The sealing portion 250 comprises a first half 255 and a second half 256. The first half 255 and the second half 256 are separated by a central slit 257 that is oriented in parallel to the longitudinal direction 201. The first half 255 of the sealing portion 250 is connected to the first group of strips 230. The second half 256 of the sealing 250 is connected to the second group of strips 230. The central slit 257 between the first half 255 and the second half 256 of the sealing portion 250 forms a continuation of the central slit 241 arranged between the two groups of strips 230. In the lateral direction 202, the central slit 257 may for example comprise a width of 8 mm.

The connection portion 260 of the second shielding connector 200 comprises a first end 261 and a second end 262 that is opposed to the first end 261. The first end 261 of the connection portion 260 is integrally connected to the second end 252 of the sealing portion 250. The connection portion 260 connects the first half 255 of the sealing portion 250 and the second half 256 of the sealing portion 250. Between the first end 261 and the second end 262, the connection 260 comprises a length 263 in the longitudinal direction 201. The length 263 may for example be 29 mm.

The clamping element 210 of the second shielding connector 200 comprises a plurality of protruding elements 220. The protruding element 220 are preferably arranged in a regular pattern. The protruding elements 220 of the clamping element 210 of the second shielding connector 200 are designed like the protruding elements 120 of the clamping element 120 of the first shielding connector 100. Each protruding element 220 comprises a number of sharp corners that protrude in a direction perpendicular to the longitudinal direction 201 and the lateral direction 202 from a surface of the clamping element 210. The clamping element 210 with the protruding elements 220 comprises similarities to a grater, for example a cheese grater.

Figure 6 shows a perspective view of the second shielding connector 200 after further processing steps. The clamping element 210 of the second shielding connector 200 is bent around a first bending axis 214. The first bending axis 214 is arranged in parallel to the longitudinal direction 216 of the clamping element 210.

The clamping element 210 is bent in such a way that the bent clamping element 210 comprises the shape of a sector of a cylindrical tube. The cylindrical tube may for example comprise a diameter of 25 mm. This diameter may be adjusted to match the diameter of a shielding of a power cable. The clamping element 210 may for example be bent about an angle of 180° or less or more.

After the bending of the clamping elements 210, the protruding elements 220 of the clamping element 210 protrude in an radially outward direction from a convex surface 213 of the clamping element 210.

In a further production step, the sealing portion 250 and the connection portion 260 of the clamping element 210 are bent around a second bending axis 254. The second bending axis 254 is arranged in parallel to the longitudinal direction 258 of the sealing portion 250. The second bending axis 254 is offset with respect to the first bending axis 214. The sealing portion 250 and the connection portion 260 are bent around the second bending axis 254 in an opposite direction compared to the bending of the clamping element 210. Consequently, the surface of the sealing portion 250 and the connection portion 260 that forms a continuation of the convex surface 213 of the clamping element 210 forms a concave surface of the bent sealing portion 250 and the bent connection portion 260. Vice versa, a convex surface of the bent sealing portion 250 and the bent connection portion 260 forms a continuation of a concave surface of the bent clamping element 210.

The bent sealing portion 250 and the bent connection portion 260 both comprise the shape of a sector of a cylindrical tube with a diameter which approximately matches the diameter of the bent clamping element 210. The sealing portion 250 and the connection portion 260 are bent about approximately the same angle as the clamping element 210 of the second shielding connector 200.

After bending the clamping element 210, the sealing portion 250 and the connection portion 260 of the second shielding connector 200, the sealing portion 250 and the connection portion 260 are bent with respect to the clamping element 210 in such a way that the longitudinal direction 216 of the clamping element 210 remains parallel to the longitudinal direction 201, while the longitudinal direction 258 of the sealing portion 250 is now oriented approximately perpendicularly to the longitudinal directions 201, 216 and approximately in parallel to the original lateral direction 202. Bending the sealing portion 250 and the connection portion 260 with respect to the clamping element 210 is carried out by bending and deforming the strips 230 of the second shielding connector 200.

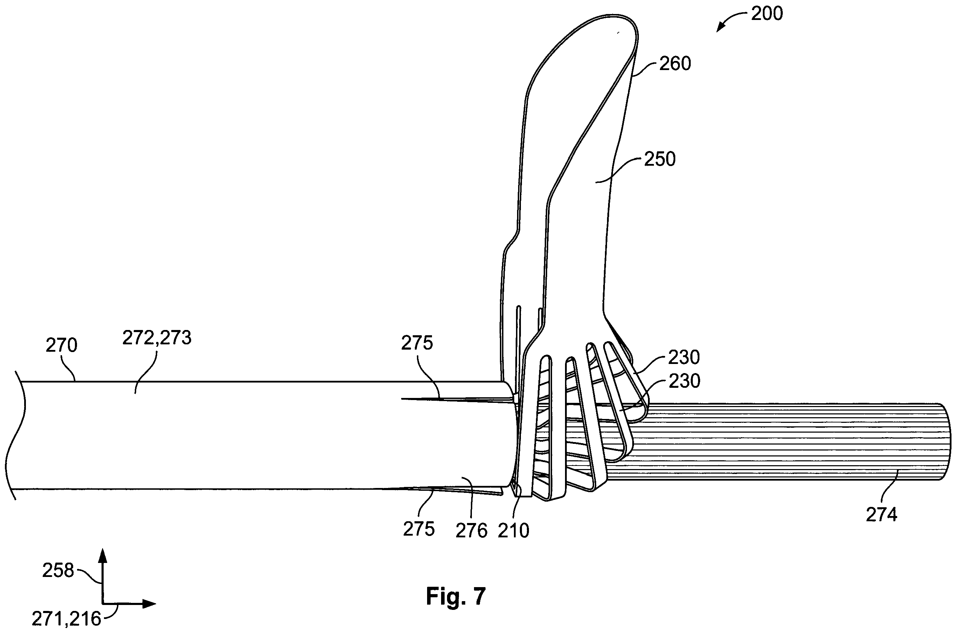

In the following, the installation of the second shielding connector 200 will be explained with reference to Figures 7 to 10. The procedure for installing the first shielding connector 100 of Figure 3 is very similar so that the following description is also valid for the first shielding connector 100. Deviations will be mentioned below.

Figure 7 shows a power cable 270. The power cable 270 may for example be a medium-voltage power cable. The power cable 270 may for example be designed for voltages between 1 kV and 72 kV. The power cable 270 extends along a longitudinal direction 271.

Figure 7 shows an end portion of the power cable 270. The end portion of the power cable 270 is to be connected to an end portion of a further power cable via a cable joint. This requires establishing electric connections between metal conductors of the power cable 270 and the further power cable and between shieldings of the power cable 270 and the further power cable. It may also require to establish an electric connection between the shieldings of the power cables and an external earthing contact (ground contact).

Starting from the outside of the power cable 270, the power cable 270 comprises a cable jacket 272, a shielding 273 and a conductive layer 274. Below the conductive layer 274, the power cable 270 comprises further components such as an insulation layer and the metal conductor, all of which are not visible in Figure 7. The cable jacket 272 comprises a mechanically robust and electrically insulating material. The shielding 273 comprises an electrically conductive material and is arranged between the cable jacket 272 and the conductive layer 274. The shielding 273 may for example comprise a copper tape or an aluminum tape (aluminum film). The shielding 273 is not clearly visible in Figure 7. The cable jacket 272 of the power cable 270 is partially removed to expose a part of the conductive layer 274 of the power cable 270.

In a contact section 276 near the end of the power cable 270, the cable jacket 272 and the shielding 273 have been sliced with several cuts 275 which are arranged in parallel to the longitudinal direction 271 of the power cable 270. Afterwards, the clamping element 210 of the second shielding connector 200 has been squeezed under the shielding 273 and the cable jacket 270 in the contact section 276 of the power cable 270. The clamping element 210 is thus arranged between the conductive layer 274 and the shielding 273 of the power cable 270. The protruding elements 220 of the clamping element 210 face towards the shielding 273 of the power cable 270.

After the insertion of the clamping element 210 of the second shielding connector 200 underneath the shielding 273 and the cable jacket 272 in the contact section 276 of the power cable 270, the cable jacket 272 and the shielding 273 have been pressed radially inwards in the contact section 276 to pierce the protruding elements 220 of the clamping element 210 of the second shielding connector 200 through the shielding 273 of the power cable 270 in order to create a reliable and robust mechanical and electric connection between the clamping element 210 of the second shielding connector 200 and the shielding 273 of the power cable 270. Pressing the cable jacket 272 and the shielding 273 of the contact section 276 of the power cable 270 against the protruding elements 220 can for example be carried out using a pair of tongs or a similar tool known in the state of the art.

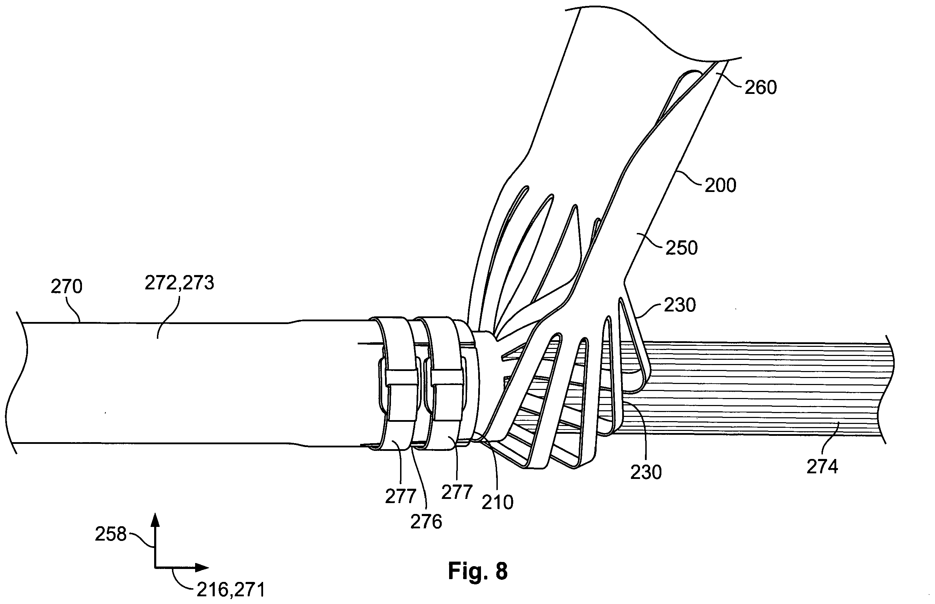

After piercing the protruding elements 220 of the clamping element 210 of the second shielding connector 200 through the shielding 273 of the power cable 270, bandage elements 277 are arranged around the cable jacket 272 in the contact section 276 of the power cable 270 to fixate the clamping element 210 of the second shielding connector 200 underneath the shielding 273 of the power cable 270. This is depicted in Figure 8.

After the installation of the clamping element 210 of the second shielding connector 200 underneath the shielding 273 of the power cable 270, the longitudinal direction 258 of the sealing portion 250 and the connection portion 260 of the second shielding connector 200 is oriented approximately perpendicularly to the longitudinal direction 271 of the power cable 270.

Installation of the first shielding connector 100 is carried out accordingly. The clamping element 110 of the first shielding connector 100 is arranged underneath the shielding 273 of the power cable 270 in the contact section 276 of the power cable 270. After the installation of the clamping element 110 of the first shielding connector 100 underneath the shielding 273 of the power cable 270, the strips 130 extend radially outwards in a direction perpendicular to the longitudinal direction 271 of the power cable 270.

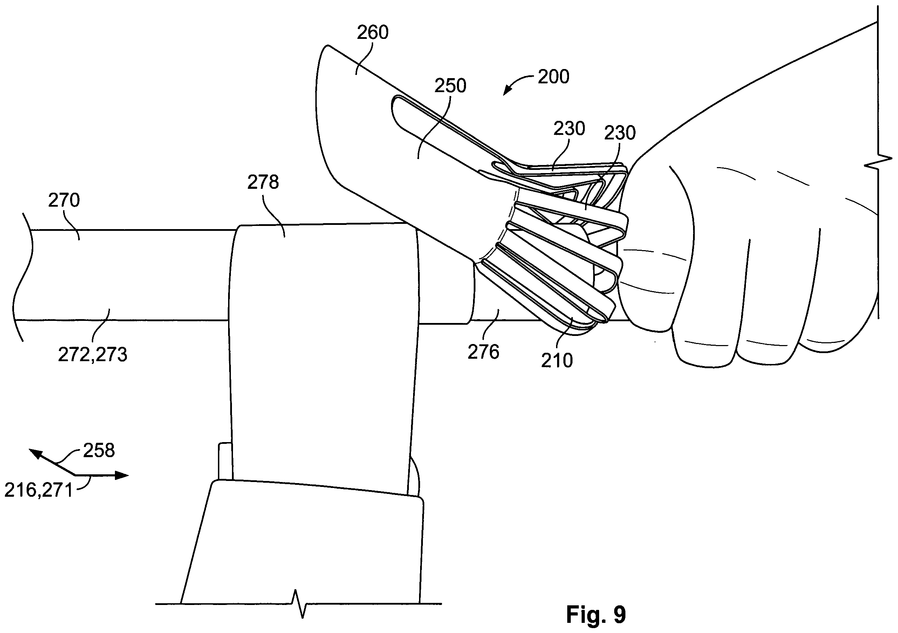

Figure 9 illustrates a following step in the installation of the second shielding connector 200. A first layer of mastic 278 is wrapped around the bandage elements 277 and the cable jacket 272 of the power cable 270 in the contact section 276 of the power cable 270.

Afterwards, the sealing portion 250 and the connection portion 260 of the second shielding connector 200 are bent down towards the power cable 270 by bending the strips 230 of the second shielding connector 200. Bending down the sealing portion 250 and the connection portion 260 of the second shielding connector 200 can be carried out manually or by using a suitable tool as the one explained below with reference to Figures 12 to 15.

The sealing portion 250 and the connection portion 260 are bent down towards the power cable 270 until the longitudinal direction 258 of the sealing portion 250 and the connection portion 260 of the second shielding connector 200 is arranged in parallel to the longitudinal direction 271 of the power cable 270. The concave surface of the sealing portion 250 and optionally also the concave surface of the connection portion 260 of the second shielding connector 200 are then at least partially in contact with the first layer of mastic 278 arranged around the cable jacket 272 of the power cable 270 in the contact section 276 of the power cable 270. The strips 230 of the second shielding connector 200 are bent backwards towards the cable jacket 272 of the power cable 270.

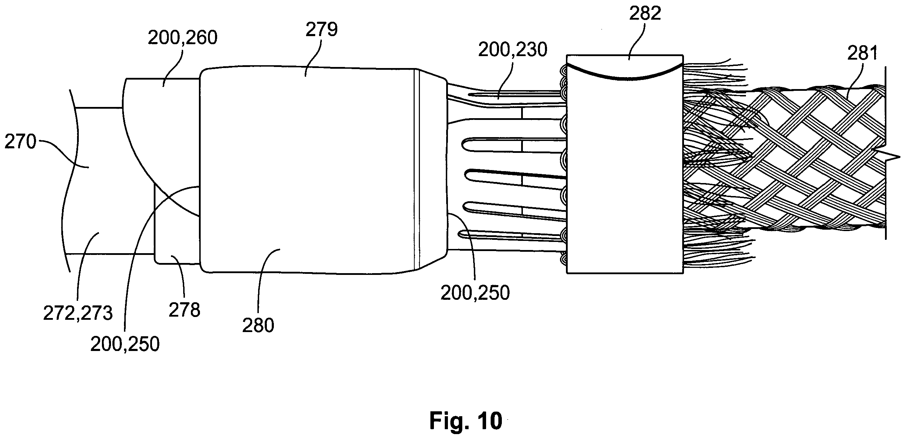

Figure 10 shows the power cable 270 and the second shielding connector 200 after further installation steps. A second layer of mastic 279 has been wrapped around the sealing portion 250 of the second shielding connector 200 and the power cable 270 to form a sealing 280. The sealing 280 may be a watertight sealing.

The connection portion 260 is not covered by the second layer of mastic 279. The connection portion 260 can be connected to an earthing lead to electrically connect the second shielding connector 200 and thus the shielding 273 of the power cable 270 to an external earthing contact (ground contact). The earthing lead may for example be a flexible copper braid or another kind of electrically conductive lead. The earthing lead may for example be connected to the connection portion 260 of the second shielding connector 200 by means of welding or soldering. The earthing lead may already be connected to the connection portion 260 before the second shielding connector 200 is installed on the power cable 270.

Furthermore, a metallic mesh (socket) 281 has been electrically connected to the strips 230 of the second shielding connector 200 by means of a roll spring 282. The mesh 281 comprises a tubular shape and extends from the strips 230 over the end of the power cable 270 and towards a further power cable where the mesh 281 is connected to a shielding of that further power cable via a further second shielding connector.

Installation of the first shielding connector 100 is carried out accordingly. After the installation of the clamping element 110 of the first shielding connector 100 underneath the shielding of a power cable, the strips 130 of the first shielding connector 100 are bent backwards over the cable jacket of the power cable into the arrangement schematically depicted in Figure 4. Afterwards, the strips 130 of the first shielding connector 100 are electrically connected to a mesh via a roll spring. The mesh electrically connects the strips 130 of the first shielding connector 100 to strips 130 of a further first shielding connector 100 that is electrically connected to a shielding of a further power cable. The first shielding connector 100 is not connected to an earthing lead. Consequently, no sealing is required when the first shielding connector 100 is installed on a power cable.

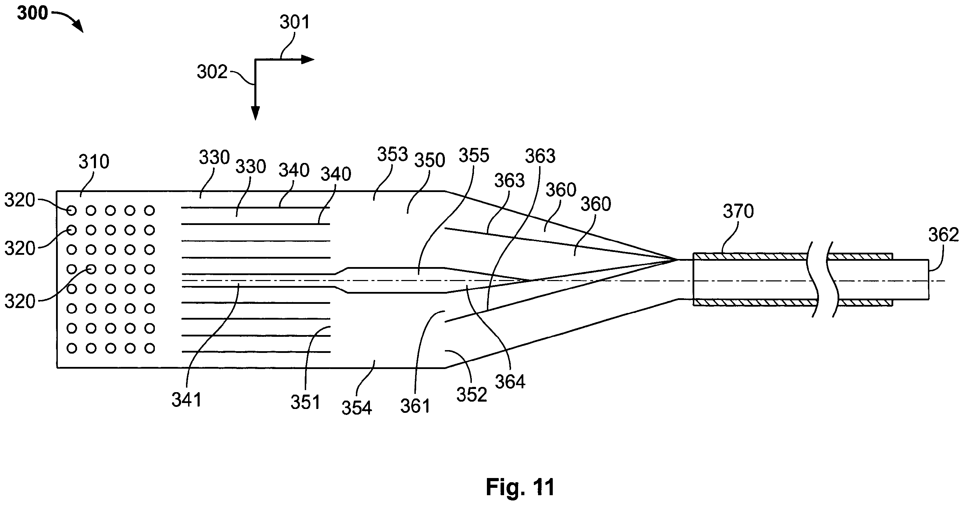

Figure 11 shows a schematic top view of a third shielding connector 300. The third shielding connector 300 can be used as an alternative to the second shielding connector 200 to electrically contact the shielding 273 of the power cable 270 and to provide an electric connection between the shielding 273 of the power cable 270 and an external earthing contact. The third shielding connector 300 is similar to the second shielding connector 200. The description of the second shielding connector 200 also applies to the third shielding connector 300 unless otherwise noted.

Figure 11 shows the third shielding connector 300 in an unfinished state during production of the third shielding connector 300. The unfinished third shielding connector 300 comprises a generally flat shape. The unfinished third shielding connector 300 comprises an electrically conductive material, preferably a metal. The unfinished third shielding connector 300 may for example be produced from a metallic sheet material by means of stamping or punching.

The third shielding connector 300 extends into a longitudinal direction 301 and a lateral direction 302. The third shielding connector 300 comprises a clamping element 310, a plurality of strips 330, a sealing portion 350 and a plurality of outer strips 360. These components of the third shielding connector 300 are all formed integrally. The clamping element 310, the strips 330, the sealing portion 350 and the outer strips 360 are arranged one after another along the longitudinal direction 301.

The clamping element 310, the strips 330 and the sealing portion 350 of the third shielding connector 300 are designed similarly to the respective components of the second shielding connector 200. The clamping element 310 comprises a plurality of protruding elements 320 which are arranged in a regular pattern and give the clamping element 310 the appearance of a grater. The strips 330 are divided up into two groups which are separated by a central slit 341. The strips 330 of each group of strips 330 are separated by first slits 340. The sealing portion 350 comprises a first end 351 and a second end 352 that is opposed to the first end 351. The first end 351 of the sealing portion 350 is integrally connected to the strips 330. The sealing portion 350 comprises a first half 353 and a second half 354. The first half 353 of the sealing portion 350 is connected to the first group of strips 330. The second half 354 of the sealing portion 350 is connected to the second group of strips 330. The first half 353 and the second half 354 of the sealing portion 350 are separated by a central slit 355 that is a continuation of the central slit 341 which separates the two groups of strips 330 from each other.

The outer strips 360 each comprise a first end 361 and a second end 362 that is opposed to the first end 361. The first ends 361 of the outer strips 360 are integrally connected to the second end 352 of the sealing portion 350. The outer strips 360 extend in parallel to the longitudinal direction 301.

In the longitudinal direction 301, the outer strips 360 may comprise a very long length between the first ends 361 and the second ends 362. The outer strips 360 may for example comprise a length of 50 cm or 1 m.

In the example depicted in Figure 11, the third shielding connector 300 comprises four outer strips 360 that are divided up into two groups. The two groups of outer strips 360 are separated by a central slit 364 that forms a continuation of the central slit 355 arranged between the first half 353 and the second half 354 of the sealing portion 350 of the third shielding connector 300. The outer strips 360 of each group of outer strips 360 are separated by first slits 363. It is, however, possible to provide the third shielding connector 300 with a different number of outer strips 360. It is for example possible, as well, to provide the third shielding connector 300 with only one outer strip 360.

While the outer strips 360 are arranged next to each other along the lateral direction 302 at their first ends 361, the outer strips 360 are piled up and arranged above each other in a section between near their first ends 361 and near their second ends 362 to achieve a compact stacked arrangement. The pile of strips 360 is arranged in a tubing 370 that holds the outer strips 360 together. The tubing 370 may for example be made from a heatshrink material.

Near the second ends 362 of the outer strips 360, the pile of outer strips 360 may comprise a bore or a similar fixation means for fixing the second ends 362 of the outer strips 360 to an earthing contact.

In a manufacturing step which follows the depiction of Figure 11, the clamping element 310 and the sealing portion 350 of the third shielding connector 300 are bent in opposite directions around bending axes that are parallel to the longitudinal direction 301. Then, the sealing portion 350 is bent by approximately 90° with respect to the clamping element 310 in such a way that the longitudinal axis of the sealing portion 350 and the outer strips 360 is arranged approximately perpendicularly to the longitudinal axis of the clamping element 310.

Afterwards, the third shielding connector 300 can be installed on the power cable 270 like the second shielding connector 200, as explained above with reference to Figures 6 to 10. When the sealing 280 is created by wrapping the second layer of mastic 279 around the sealing portion 350 of the third shielding connector 300, the outer strips 360 remain free and accessible. The outer strips 360 are sufficiently long to be directly connected to an external grounding contact. The third shielding connector 300 thus renders it unnecessary to connect any additional earthing lead to the third shielding connector 300 by means of welding or soldering.

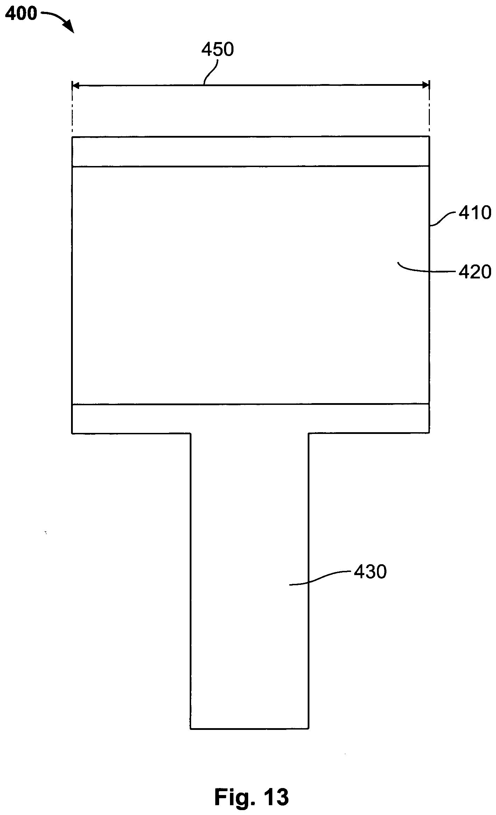

During the installation of the shielding connectors 100, 200, 300, it is necessary to bend the strips 130, 230, 330 backwards towards the cable jacket 272 of the power cable 270 in an arrangement which is in parallel to the longitudinal direction 271 of the power cable 270, as depicted in Figure 9. Figures 12 and 13 schematically depict a first tool 400 that can be used for bending the strips 130, 230, 330 backwards in this installation step. Figure 12 shows a schematic side view of the first tool 400. Figure 13 shows a schematic bottom view of the first tool 400.

The first tool 400 comprises a holder portion 410 with a concave holding section 420. The concave holding section 420 of the holder portion 410 comprises the shape of a sector of a cylindrical tube. The holding section 420 of the holder portion 410 could however also be unround, like oval or have a number of edges. The holding section 420 may for example span an angle of approximately 180°, but may also span a smaller or a larger angle. The concave holding section 420 preferably comprises a radius 440 which is slightly larger than the radius of the power cable 270. The radius 440 may be for example be between 20 % smaller and 100 % larger than the outer radius of the cable jacket of the power cable 270. The holding section 420 comprises a length 450 that may for example be between 50 mm and 150 mm.

The first tool 400 furthermore comprises a handle 430 which is connected to the holder portion 410. The handle 430 may be used in order to hold the first tool 400 while the first tool 400 is applied.

The first tool 400 may for example comprise a plastic material, preferably a rigid thermoplastic material such as PP or an elastomeric material with a Shore hardness between A30 and A80.

The first tool 400 may be used to bend the sealing portion 250 and the connection portion 260 of the second shielding connector 200 down towards the cable jacket 272 of the power cable 270 during the installation step illustrated in Figure 9. To this end, an installer holds the handle 430 of the first tool 400 in his hand. The concave holding section 420 of the holder portion 410 of the first tool 400 is brought into contact with the sealing portion 250 and/or the connection portion 260 of the second shielding connector 200. The installer exerts force on the sealing portion 250 and/or the connection portion 260 of the second shielding connector 200 via the first tool 400 to deform the strips 230 of the second shielding connector 200 such that the strips 230 of the second shielding connector 200 are bent backwards towards the cable jacket 272 of the power cable 270, by what the sealing portion 250 and the connection portion 260 are bent down towards the power cable 270.

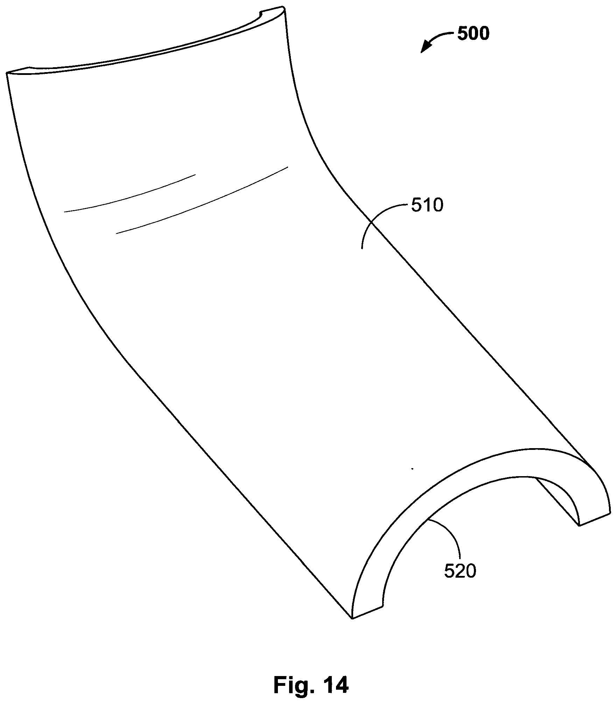

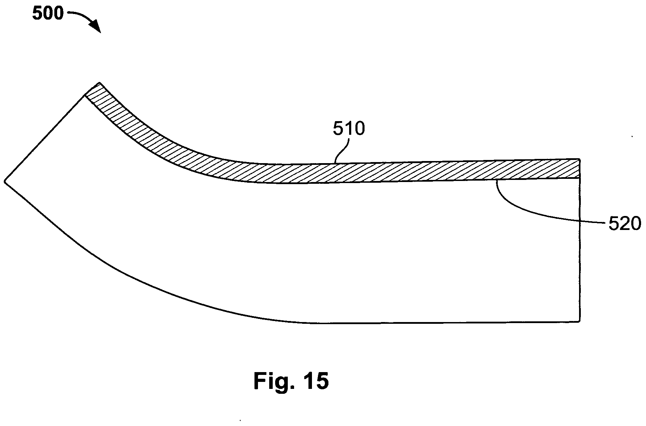

Figures 14 and 15 schematically depict a second tool 500 that may be used instead of the first tool 400 during the installation of the shielding connectors 100, 200, 300.

The second tool 500 comprises a holder portion 510 with a concave holding section 520. The concave holding section 520 of the holder portion 510 may comprise a circular cross section or may be unround, like oval or have a number of edges. The radius, length and angle of the holding section 520 of the holder portion 510 of the second tool 500 may be chosen similar to the radius 440, the length 450 and the angle of the holding section 420 of the holder portion 410 of the first tool 400.

The second tool 500 does not comprise a handle. Instead the second tool 500 is designed for being held in the palm of the hand of an installer such that the holder portion 510 of the second tool 500 protects the palm of the hand.

The holder portion 510 of the second tool 500 is not straight along its longitudinal axis but comprises a curvature that is oriented perpendicular to the curvature of the concave holding section 520 of the holder portion 510. This gives the holder portion 510 of the second tool 500 the shape of a saddle. The resulting banana-like shape of the holder portion 510 of the second tool 500 may make it easier to bend the strips 230 of the second shielding connector 200 with the second tool 500.

The wallthickness of the holder portion 510 of the second tool 500 and the material of the holder portion 510 of the second tool 500 may be chosen to enable the second tool 500 to be manually deformable. This allows to conform the strips 230 and the sealing portion 250 and the connection portion 260 of the second shielding connector 200 to the cable size better and easier, while the holder portion 510 of the second tool 500 still protects the hand of the installer.

It is possible to also design the holder portion 410 of the first tool 400 with a curvature as the holder portion 510 of the second tool 500. It is also possible to omit the handle 430 of the first tool 400.

### Reference symbols

- 100: first shielding connector
- 101: longitudinal direction
- 102: lateral direction
- 103: radial direction
- 104: bending axis
- 105: diameter

- 110: clamping element
- 111: first edge
- 112: second edge
- 113: convex surface

- 120: protruding element

- 130: strip
- 131: first end
- 132: second end
- 140: slit

- 200: second shielding connector
- 201: longitudinal direction
- 202: lateral direction
- 203:
- 204: length
- 205: first width
- 206: second width

- 210: clamping element
- 211: first edge
- 212: second edge
- 213: convex surface
- 214: first bending axis
- 215: length
- 216: longitudinal direction
- 220: protruding element

- 230: strip
- 231: first end
- 232: second end
- 233: length
- 240: first slit
- 241: central slit

- 250: sealing portion
- 251: first end
- 252: second end
- 253: length
- 254: second bending axis
- 255: first half
- 256: second half
- 257: central slit
- 258: longitudinal direction

- 260: connection portion
- 261: first end
- 262: second end
- 263: length

- 270: power cable
- 271: longitudinal direction
- 272: cable jacket
- 273: shielding
- 274: conductive layer
- 275: cut
- 276: contact section
- 277: bandage element
- 278: first layer of mastic
- 279: second layer of mastic
- 280: sealing
- 281: mesh
- 282: roll spring
- 300: third shielding connector
- 301: longitudinal direction
- 302: lateral direction

- 310: clamping element
- 320: protruding element

- 330: strip

- 340: first slit
- 341: central slit

- 350: sealing portion
- 351: first end
- 352: second end
- 353: first half
- 354: second half
- 355: central slit

- 360: outer strips
- 361: first end
- 362: second end
- 363: first slit
- 364: central slit

- 370: tubing

- 400: first tool
- 410: holder portion
- 420: holding section
- 430: handle
- 440: radius
- 450: length

- 500: second tool
- 510: holder portion
- 520: holding section

## Claims

1. A shielding connector (200, 300) for contacting a shielding (273) of a power cable (270),
the shielding connector (200, 300) comprising a clamping element (210, 310) for being brought into mechanical contact to the shielding (273) of the power cable (270) to provide an electric connection to the shielding (273) of the power cable (270),
and a plurality of strips (230, 330) extending from the clamping element (210, 310),
wherein the clamping element (210, 310) and the strips (230, 330) are formed integrally,
wherein the clamping element (210, 310) is bent around a first bending axis (214),
**characterized in that**
the shielding connector (200, 300) comprises a sealing portion (250, 350) for creating a sealing around the power cable (270) when the shielding connector (200, 300) is installed on a power cable (270),
wherein the sealing portion (250, 350) is connected to the clamping element (210, 310) by the strips (230, 330), wherein the sealing portion (250, 350) and the strips (230, 330) are formed integrally,
wherein the sealing portion (250, 350) is bent around a second bending axis (254),
wherein the sealing portion (250, 350) is bent around the second bending axis (254) in an opposite direction compared to the bending of the clamping element (210, 310) such that a concave surface of the bent sealing portion (250, 350) forms a continuation of a convex surface (213) of the clamping element (210, 310) and a convex surface of the bent sealing portion (250, 350) forms a continuation of a concave surface of the bent clamping element (210, 310).

2. The shielding connector (200, 300) according to claim 1,
wherein the strips (230, 330) are arranged at an edge (212) of the clamping element (210, 310) that is arranged perpendicular to the first bending axis (214).

3. The shielding connector (200, 300) according to one of claims 1 and 2,
wherein the clamping element (210, 310) comprises a plurality of protruding elements (220, 320) protruding outwards from a convex surface (213) of the clamping element (210, 310).

4. The shielding connector (200) according to one of the previous claims,
wherein the shielding connector (200) comprises a connection portion (260),
wherein the connection portion (260) is connected to the sealing portion (250),
wherein the connection portion (260) and the sealing portion (250) are formed integrally.

5. The shielding connector (300) according to one of claims 1 to 3,
wherein the shielding connector (300) comprises a plurality of outer strips (360),
wherein the outer strips (360) are connected to the sealing portion (350),
wherein the outer strips (360) and the sealing portion (350) are formed integrally.

6. The shielding connector (300) according to claim 5, wherein the outer strips (360) are jointly arranged in a tubing (370).

7. The shielding connector (200, 300) according to one of the previous claims, wherein the shielding connector (200, 300) comprises a metallic sheet material.

## Patentansprüche

1. Abschirmungssteckverbinder (200, 300) zum Kontaktieren einer Abschirmung (273) eines Stromkabels (270), wobei der Abschirmungssteckverbinder (200, 300) ein Klemmelement (210, 310), das in mechanischen Kontakt mit der Abschirmung (273) des Stromkabels (270) gebracht werden soll, um eine elektrische Verbindung mit der Abschirmung (273) des Stromkabels (270) bereitzustellen, und eine Vielzahl von Streifen (230, 330), die sich vom Klemmelement (210, 310) erstrecken, umfasst,
wobei das Klemmelement (210, 310) und die Streifen (230, 330) ganzheitlich ausgebildet sind,
wobei das Klemmelement (210, 310) um eine erste Biegeachse (214) gebogen ist,
**dadurch gekennzeichnet, dass**
der Abschirmungssteckverbinder (200, 300) einen Dichtungsabschnitt (250, 350) zum Erzeugen einer Abdichtung um das Stromkabel (270) herum umfasst, wenn der Abschirmungssteckverbinder (200, 300) an einem Stromkabel (270) installiert ist,
wobei der Dichtungsabschnitt (250, 350) mit dem Klemmelement (210, 310) durch die Streifen (230, 330) verbunden ist,
wobei der Dichtungsabschnitt (250, 350) und die Streifen (230, 330) ganzheitlich ausgebildet sind,
wobei der Dichtungsabschnitt (250, 350) um eine zweite Biegeachse (254) gebogen ist,
wobei der Dichtungsabschnitt (250, 350) um die zweite Biegeachse (254) in einer entgegengesetzten Richtung im Vergleich zur Biegung des Klemmelements (210, 310) gebogen ist, und zwar derart, dass eine konkave Fläche des gebogenen Dichtungsabschnitts (250, 350) eine Fortsetzung einer konvexen Fläche (213) des Klemmelements (210, 310) bildet und eine konvexe Fläche des gebogenen Dichtungsabschnitts (250, 350) eine Fortsetzung einer konkaven Fläche des gebogenen Klemmelements (210, 310) bildet.

2. Abschirmungssteckverbinder (200, 300) nach Anspruch 1,
wobei die Streifen (230, 330) an einer Kante (212) des Klemmelements (210, 310) angeordnet sind, die senkrecht zur ersten Biegeachse (214) angeordnet ist.

3. Abschirmungssteckverbinder (200, 300) nach einem der Ansprüche 1 und 2,
wobei das Klemmelement (210, 310) eine Vielzahl von vorstehenden Elementen (220, 320) aufweist, die von einer konvexen Fläche (213) des Klemmelements (210, 310) nach außen vorstehen.

4. Abschirmungssteckverbinder (200) nach einem der vorhergehenden Ansprüche,
wobei der Abschirmungssteckverbinder (200) einen Verbindungsabschnitt (260) aufweist,
wobei der Verbindungsabschnitt (260) mit dem Dichtungsabschnitt (250) verbunden ist,
wobei der Verbindungsabschnitt (260) und der Dichtungsabschnitt (250) ganzheitlich ausgebildet sind.

5. Abschirmungssteckverbinder (300) nach einem der Ansprüche 1 bis 3,
wobei der Abschirmungssteckverbinder (300) eine Vielzahl von äußeren Streifen (360) umfasst,
wobei die äußeren Streifen (360) mit dem Dichtungsabschnitt (350) verbunden sind,
wobei die äußeren Streifen (360) und der Dichtungsabschnitt (350) ganzheitlich ausgebildet sind.

6. Abschirmungssteckverbinder (300) nach Anspruch 5, wobei die äußeren Streifen (360) gemeinsam in einem Rohr (370) angeordnet sind.

7. Abschirmungssteckverbinder (200, 300) nach einem der vorhergehenden Ansprüche, wobei der Abschirmungssteckverbinder (200, 300) ein Metallblechmaterial umfasst.

## Revendications

1. Connecteur (200, 300) de blindage pour entrer en contact avec un blindage (273) d'un câble d'alimentation (270),
le connecteur (200, 300) de blindage comprenant un élément de serrage (210, 310) pour être amené en contact mécanique avec le blindage (273) du câble d'alimentation (270) pour fournir une connexion électrique au blindage (273) du câble d'alimentation (270),
et une pluralité de bandes (230, 330) s'étendant depuis l'élément de serrage (210, 310),
dans lequel l'élément de serrage (210, 310) et les bandes (230, 330) sont formés d'un seul tenant,
dans lequel l'élément de serrage (210, 310) est courbé autour d'un premier axe de courbure (214),
**caractérisé en ce que**
le connecteur (200, 300) de blindage comprend une partie d'étanchéité (250, 350) pour créer une étanchéité autour du câble d'alimentation (270) lorsque le connecteur (200, 300) de blindage est installé sur un câble d'alimentation (270),
dans lequel la partie d'étanchéité (250, 350) est reliée à l'élément de serrage (210, 310) par les bandes (230, 330),
dans lequel la partie d'étanchéité (250, 350) et les bandes (230, 330) sont formées d'un seul tenant,
dans lequel la partie d'étanchéité (250, 350) est courbée autour d'un second axe de courbure (254),
dans lequel la partie d'étanchéité (250, 350) est courbée autour du second axe de courbure (254) dans le sens opposé comparativement à la courbure de l'élément de serrage (210, 310) de sorte qu'une surface concave de la partie d'étanchéité courbée (250, 350) forme une continuité d'une surface convexe (213) de l'élément de serrage (210, 310) et qu'une surface convexe de la partie d'étanchéité courbée (250, 350) forme une continuité d'une surface concave de l'élément de serrage courbé (210, 310).

2. Connecteur (200, 300) de blindage selon la revendication 1,
dans lequel les bandes (230, 330) sont agencées au niveau d'une arête (212) de l'élément de serrage (210, 310) qui est agencé perpendiculairement au premier axe de courbure (214).

3. Connecteur (200, 300) de blindage selon l'une des revendications 1 et 2,
dans lequel l'élément de serrage (210, 310) comprend une pluralité d'éléments saillants (220, 320) dépassant vers l'extérieur à partir d'une surface convexe (213) de l'élément de serrage (210, 310).

4. Connecteur (200) de blindage selon l'une des revendications précédentes,
le connecteur (200) de blindage comprenant une partie de connexion (260),
dans lequel la partie de connexion (260) est connectée à la partie d'étanchéité (250),
dans lequel la partie de connexion (260) et la partie d'étanchéité (250) sont formées d'un seul tenant.

5. Connecteur (300) de blindage selon l'une des revendications 1 à 3,
le connecteur (300) de blindage comprenant une pluralité de bandes externes (360),
dans lequel les bandes externes (360) sont connectées à la partie d'étanchéité (350),
dans lequel les bandes externes (360) et la partie d'étanchéité (350) sont formées d'un seul tenant.

6. Connecteur (300) de blindage selon la revendication 5, dans lequel les bandes externes (360) sont agencées ensemble dans un tube (370).

7. Connecteur (200, 300) de blindage selon l'une des revendications précédentes, dans lequel le connecteur (200, 300) comprend un matériau de tôle métallique.
